# EUROPEAN PATENT APPLICATION

(11) **EP 1 865 438 A1**
(43) Date of publication of application: **12.12.2007**
(21) Application number: 07010908.7
(22) Date of filing: 01.06.2007
(51) Int. Cl.: G06K 7/00, G06K 7/08, G06K 7/10, H01Q 19/10

(54) **Wireless communication system and wireless communication method**

(30) Priority: 09.06.2006 JP 2006160694; 16.05.2007 JP 2007130849
(71) Applicant: NEC Corporation, Minato-ku Tokyo (JP)
(72) Inventor: Hatakeyama, Shigeru, Tokyo (JP); Yamazaki, Shigeru, Tokyo (JP); Murayama, Hiroki, Tokyo (JP); Hirano, Koichi, Tokyo (JP)
(74) Representative: Glawe, Delfs, Moll

(57) **Abstract**

To perform communication between an antenna and an RFID tag securely. There are generated an interference area with an increased electric field level and an interference area with a decreased level, due to reflections at the upper and lower reflection plates. There are two reflective faces in each reflection plate, which are joined while being shifted from each other by 1/4 wavelength of the electromagnetic wave. Since the two reflective faces are being shifted, the interference area with a decreased electric field level moves on a production line according to a move of a dolly transporting the article. Thus, even if the RFID tag on the article passes through the interference area with a decreased electric field level in a first-half section, it comes to pass the point with recovered electric field level in a latter-half section. Therefore, the antenna can communicate with the RFID tag securely.

## Description

### BACKGROUND OF THE INVENTION

### 1. Field of the Invention

The present invention relates to a wireless communication system and a wireless communication method.

### 2. Description of the Related Art

There is a wireless communication system which performs read/write communications between RFID (Radio Frequency Identification) tags as wireless tags and antennas (see Japanese Unexamined Patent Publication 2003-295339 (Patent Literature 1), for example).

The wireless communication system disclosed in Patent Literature 1 is a combination of RFID tags, a conveyor, and antennas. An RFID tag is attached to an article, to which an identification number and the like of the article is stored. The conveyor transports the articles to which the RFID tags are attached, and the antennas perform wireless communication between the RFID tags.

In such wireless communication system, the articles face towards random directions. Accordingly, the RFID tags face in the random directions. Further, the level of radio wave received at the RFID tags varies depending on the facing direction of the RFID tag faces.

Therefore, in the above-described wireless communication system, the antennas are provided on both sides of the conveyor so as to irradiate electromagnetic waves to the RFID tags from both sides of the conveyor to communicate with all the RFID tags.

Further, as the wireless communication system, the antennas are provided above the production line and a plane reflection plates are provided on the side of the production line so as to perform wireless communication with all the RFID tags that face towards different directions.

The plane reflection plate reflects the electromagnetic waves from the antennas provided above towards the RFID tags on the production line. The antennas irradiate direct waves of the electromagnetic waves to the RFID tags, and the plane reflection plate reflects the electromagnetic waves from the antennas above thereby to irradiate the reflected waves to the RFID tags. Through this, the antennas perform wireless communication with the RFID tags.

When the electromagnetic waves from the antenna are reflected at the plane reflection plate in the conventional wireless communication system that is provided with the above-described plane reflection plate, the reflected waves spread out. The reflected waves reflected from a plurality of reflection plates overlap and interfere with each other.

When each of the reflected waves is in phase, the electric field level of the electromagnetic wave at the interference points increases. When each of the reflected weaves is in reversed phase, the electric field level of the electromagnetic wave at the interference points decreases. Therefore, there are generated the points where the electric filed level is high and the points where the level is low in the vicinity of front faces of the reflection plates.

In the conventional wireless communication system described above, a plurality of plane reflection plates are arranged in parallel with different tilt angles on a transporting path such as a passage or a production line in such postures that the reflected waves can be converged towards the articles that are moving on the transporting path. In addition, the plurality of plane reflection plates are arranged in the vertical direction (on the upper side and lower side). Therefore, the reflected waves from the adjacent plane reflection plates in the vertical direction may interfere with each other as mentioned above.

The phenomenon where the reflected waves from the plane reflection plates interfere with each other generates points with a high electric filed level and a low electric field level depending on the distance from the plane reflection plates. In the conventional wireless communication system, the reflective faces of the plane reflection plates are located at a uniform distance with respect to the passage or the production line. Thus, areas of the point where the electric field level of the reflected waves is high and the point where the electric field level is low exist uniformly with respect to the direction towards which the RFID tags of the articles move.

Therefore, the RFID tags that pass through the point where the electric field level of the reflected wave is low never pass through the point where the electric field level of the reflected wave is high even though they move on the transporting path. Thus, it is not possible to achieve communication with the RFID tags of the articles that pass through the point with the low electric field of the reflected waves. Therefore, it is not possible to obtain the necessary information from all the RFID tags that pass on the transporting path.

### SUMMARY OF THE INVENTION

An exemplary object of the present invention is to provide a wireless communication system which can securely perform communication with RFID tags of articles that move on a transporting path, even under an environment where mutual interference of the reflected waves occurs.

In order to achieve the foregoing object, a wireless communication system according to the present invention is a wireless communication system which performs communication between a wireless tag attached to an article transported on a transporting path and an antenna that irradiates an electromagnetic wave towards the transporting path, the system comprising a reflection plate for reflecting the electromagnetic wave from the antenna to the wireless tag on the transporting path, wherein
the reflection plate comprises a plurality of reflective faces along a length direction of the transporting path, wherein
the reflective faces are located at positions for improving an interference area that is generated due to interference between reflected waves.

Further, a wireless communication system according to the present invention may comprise:
a wireless tag attached to a transported article that is transported through a transporting path, which transmits stored identification information of the transported article by wireless in response to an irradiated electromagnetic wave for inquiry;
an antenna which sends out the electromagnetic wave and receives the identification information of the transported article transmitted from the wireless tag; and
a plurality of reflection plates having a plurality of reflective faces for reflecting the electromagnetic wave, which are placed along the transporting path to reflect the electromagnetic wave in such a manner that an interference area generated due to interference between reflected waves of the electromagnetic wave moves on the transporting path in accordance with a move of the transported article.

Furthermore, a wireless communication system according to the present invention may comprise:
a wireless tag attached to a transported article that is transported through a transporting path, which transmits stored identification information of the transported article by wireless in response to an irradiated electromagnetic wave for inquiry;
an antenna which sends out the electromagnetic wave and receives the identification information of the transported article transmitted from the wireless tag;
a plurality of reflection plates having a reflective face for reflecting the electromagnetic wave, which are placed along the transporting path; and
a reflection plate control part which controls the plurality of reflection plates in such a manner that an interference area generated due to interference between reflected waves of the electromagnetic wave moves on the transporting path in accordance with a move of the transported article.

Moreover, a wireless communication system according to the present invention may comprise:
a wireless tag attached to a transported article that is transported through a transporting path, which transmits stored identification information of the transported article by wireless in response to an irradiated electromagnetic wave for inquiry;
an antenna which sends out the electromagnetic wave and receives the identification information of the transported article transmitted from the wireless tag; and
a reflection plate for reflecting the electromagnetic wave, placed along the transporting path, having an angle between a reflective face of the reflection plate and the transporting path set in such a manner that an interference area generated due to interference between reflected waves of the electromagnetic wave moves on the transporting path in accordance with a move of the transported article.

With the present invention, it is possible to perform communication securely between the antennas and the wireless tags.

### BRIEF DESCRIPTION OF THE DRAWINGS

FIG. 1 is a side view for showing the structure of an RFID communication system used in a logistics management system, as a structure of a wireless communication system according to a first exemplary embodiment of the present invention;
FIG. 2 is a front elevational view of the RFID communication system shown in FIG. 1;
FIG. 3 is an illustration for showing the structure of an RFID tag;
FIGS. 4 illustrate a reflection plate, in which FIG. 4A is an illustration viewed from the Z direction, FIG. 4B is an illustration viewed from the Y direction, and FIG. 4C is an illustration viewed from the X direction;
FIGS. 5 are illustrations for showing the principle of generating interference areas by the reflection plates provided vertically, in which FIG. 5A is an illustration viewed from the X direction, and FIG. 5B is an illustration viewed from the Z direction;
FIG. 6 is a side view for showing a structure of an RFID communication system used in a logistics management system, as another structure of a wireless communication system according to the first exemplary embodiment of the present invention;
FIG. 7 is a front elevational view of the RFID communication system shown in FIG. 6;
FIG. 8 is an illustration for showing a structure of an RFID communication system according to a second exemplary embodiment of the present invention;
FIGS. 9 are illustrations for showing the principle of generating interference areas by the reflection plates of FIG. 8 that are provided vertically, in which FIG. 9A is an illustration viewed from the X direction, and FIG. 9B is an illustration viewed from the Z direction;
FIG. 10 is a side view for showing a structure of an RFID communication system used in a logistics management system, as a structure of another wireless communication system according to the second exemplary embodiment of the present invention;
FIG. 11 is a front elevational view of the RFID communication system shown in FIG. 10;
FIGS. 12 are illustrations for showing a reflection plate having three reflective faces (N=3), in which FIG. 12A is an illustration viewed from the Z direction, FIG. 12B is an illustration viewed from the Y direction, and FIG. 12C is an illustration viewed from the X direction;
FIG. 13 is an illustration for showing an interference area that is generated when the reflection plate shown in FIG. 12 is used;
FIGS. 14 are illustrations for showing an applied example of the reflection plate where the reflection plate has two reflective faces that are joined by changing the angles, in which FIG. 14A is an illustration viewed from the Z direction, FIG. 14B is an illustration viewed from the Y direction, FIG. 14C is an illustration viewed from the X direction, and FIG. 14D is a perspective view of the reflection plate;
FIGS. 15 are illustrations for showing an applied example where two reflection plates are moved horizontally or vertically, in which FIG. 15A is an illustration viewed from the Y direction, FIG. 15B is an illustration viewed from the X direction, and FIG. 15C is an illustration for showing a reflection plate control part for moving the reflection plates;
FIGS. 16 are illustrations for showing an applied example where two reflection plates are moved with angles, in which FIG. 16A is an illustration viewed from the Y direction, FIG. 16B is an illustration viewed from the X direction, and FIG. 16C is an illustration for showing a reflection plate control part for moving the reflection plates;
FIGS. 17 are illustrations for showing an applied example where a single reflection plate is rotated, in which FIG. 17A is an illustration viewed from the Y direction, FIG. 17B is an illustration viewed from the X direction, and FIG. 17C is an illustration for showing a reflection plate control part for rotating the reflection plate;
FIGS. 18 are illustrations for showing an applied example where a single reflection plate is rotated at an angle α with respect to the traveling direction of a dolly, in which FIG. 18A is an illustration viewed from the Z direction, FIG. 18B is an illustration viewed from the Y direction, and FIG. 18C is an illustration viewed from the X direction; and
FIG. 19 is an illustration for showing an interference area that is generated when the reflection plate shown in FIG. 18 is used.
FIG. 20 is an illustration for showing a reflection plate used in the third exemplary embodiment of the present invention viewed from the Z direction.

### DETAILED DESCRIPTION OF THE EXEMPLARY EMBODIMENTS

Radio communication systems according to exemplary embodiments of the present invention will be described hereinafter by referring to the accompanying drawings. In the exemplary embodiments below, the wireless communication system is described as an RFID communication system that is used for a logistics management system.

### (First Exemplary Embodiment)

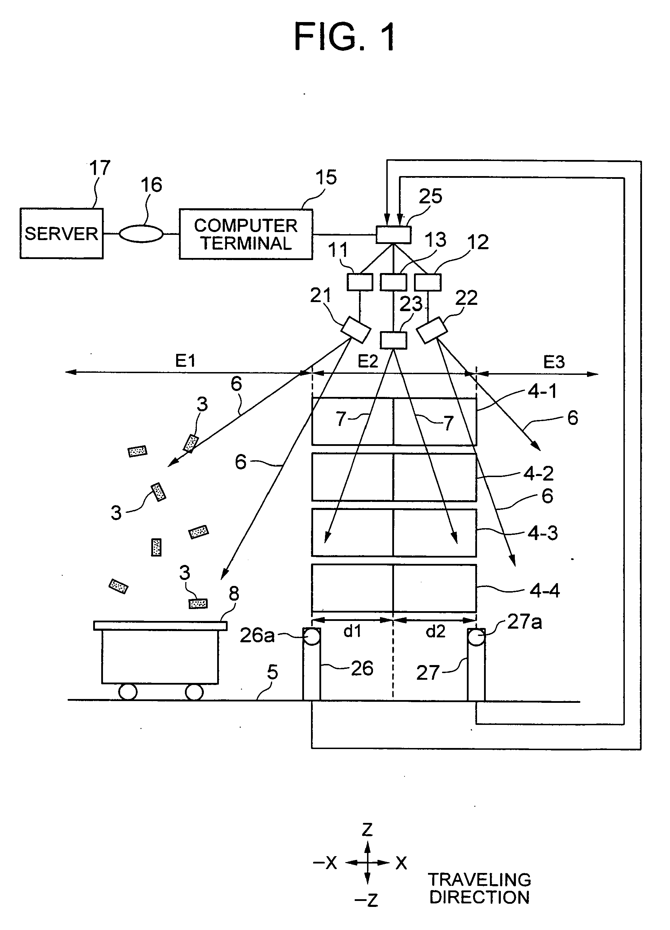

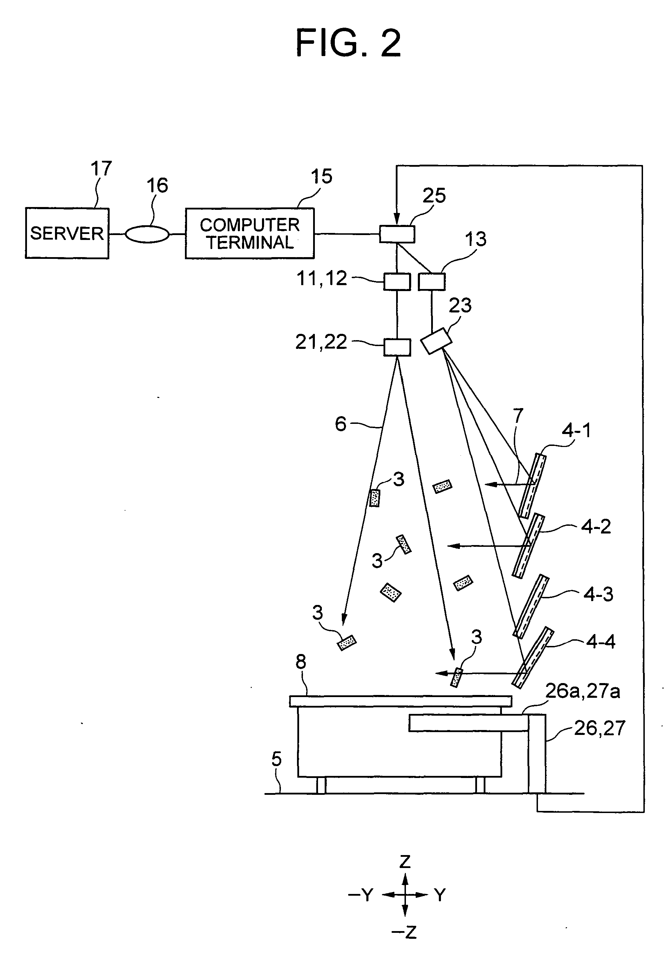

As shown in FIG. 1 and FIG. 2, the wireless communication system according to a first exemplary embodiment of the present invention includes RFID tags 3, antennas 21 to 23, reflection plates 4 (4-1 to 4-4), reader/writers 11 to 13, an antenna switching device 25, door sensors 26, 27, and a computer terminal 15.

Articles (not shown) as management targets are loaded on a dolly 8 that moves on a transporting path 5 such as a passage or a production line, and are transported to a target area along the article transporting path 5. It is assumed that the dolly 8 is moved on the transporting path 5 in an X direction (traveling direction) shown in FIG. 1.

The exemplary embodiment shown in FIG. 1 comprises a plurality of antennas 21 to 23, and electromagnetic wave irradiation areas E1, E2, and E3 assigned to each of the antennas 21, 22, and 23 are set in the length direction (X direction) of the transporting path 5.

The RFID tags 3 are attached on the articles that are piled up on the dolly 8, to which the information corresponding to the respective articles is stored. Processing such as identifying the articles is executed by utilizing the information stored in the RFID tags 3.

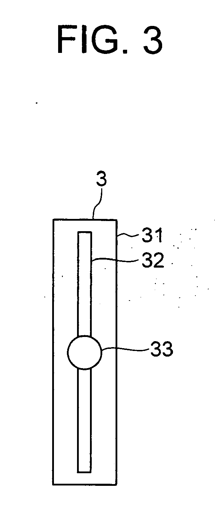

FIG. 3 shows an example of the structure of the RFID tag 3. The RFID tag 3 includes a dielectric substrate 31, an antenna 32, and a tag IC (Integrated Circuit) 33.

The antenna 32 is used for transmitting and receiving data on electromagnetic waves. For example, it is constituted with a dipole antenna, and formed on the dielectric substrate 31. The surface of the above-described dielectric substrate 31 is an antenna face (antenna 32), which functions as an RFID tag face.

The tag IC 33 comprises a modulation/demodulation part (not shown), a memory (not shown), and the like. The memory is used for storing information regarding the articles to which the RFID tags 3 are attached. As the information, the memory stores identification numbers and the like for identifying the articles.

The modulation/demodulation part modulates the electromagnetic waves base on data of the information stored in the memory, and demodulates signals of the electromagnetic waves received by the antenna 32.

Upon receiving irradiations of electromagnetic waves from one of the antennas 21 to 23, the RFID tag 3 is started up by the electric power induced by the electromagnetic waves, and the electronic components such as the modulation/ demodulation part and the memory described above start to operate. The RFID tags 3 are attached to the articles, and the articles with the attached RFID tags 3 are loaded on the dolly 8. Thus, the facing directions of the articles to which the RFID tags 3 are attached are not necessarily directed in a certain direction, depending on how the articles are loaded. Therefore, there are cases where the RFID tag faces of the RFID tags 3 face towards random directions.

From the antenna 21, the electromagnetic wave level received at the RFID tag 3 changes in proportion to an effective reception area of the electromagnetic wave in the RFID tag face. When the receiving electromagnetic wave level increases, it becomes possible to receive inquiry signals (electromagnetic waves) that are irradiated from the antennas 21 to 23. When the RFID tag face comes to face with the irradiation face of one of the antennas 21 to 23, the effective reception area of the electromagnetic wave in the RFID tag face becomes the maximum. Thus, the receiving electromagnetic wave level becomes the maximum.

Upon receiving an inquiry signal, the RFID tag 3 in response reads out information such as the identification number and the like of the article from the memory within the tag IC 33, and transmits it to one of the antennas 21 to 23 via the antenna 32.

The antennas 21 to 23 send out the electromagnetic waves to irradiate those waves to the RFID tag 3 so to perform communication with the RFID tag 3, and receive the information such as the identification numbers and the like of the articles that are transmitted from the RFID tag 3. The antennas 21 to 23 are placed above the transporting path by corresponding to the almost center position in the length direction (X direction) of reflection plate 4 that is described later.

As shown in FIG. 1, the antenna 21 is arranged in such a posture that the electromagnetic wave is irradiated towards the front face of the dolly 8 in the electromagnetic wave irradiation area E1, and the antenna 21 irradiates the electromagnetic wave towards the dolly 8 from the front of the dolly 8. Then, the antenna 21 performs communication with a direct wave 6 with the RFID tag 3 whose RFID tag face faces towards the direction of the antenna 21.

As shown in FIG. 2, the antenna 23 is arranged in such a posture that the electromagnetic wave irradiating face faces downwards to the dolly 8 in the electromagnetic wave irradiation area E2. As shown in FIG. 23, the antenna 23 performs communication with a direct wave between the RFID tag 3 whose RFID tag face faces towards the direction of the antenna 23 and, at the same time, performs communication with the RFID tag 3 by a reflected wave 7 through utilizing the reflected wave 7 that is reflected at the reflection plate 4, which reaches the RFID tag face of the RFID tag 3.

As shown in FIG. 1, the antenna 22 is arranged in such a posture that the electromagnetic wave irradiating face irradiates the electromagnetic wave towards the back face of the dolly 8 that is located in the electromagnetic wave irradiation area E3, and the antenna 22 irradiates the electromagnetic wave towards the dolly 8 from the behind the dolly 8. Then, the antenna 22 performs communication with the direct wave 6 with the RFID tag 3 whose RFID tag face faces towards the direction of the antenna 22.

When a control signal is supplied from the computer terminal 15, the reader/writers 11 to 13 output inquiry signals to the RFID tags 3 repeatedly through the antennas 21 to 23. When there is a response from the RFID tag 3, the antennas 21 to 23 perform communication with the RFID tag 3 that has responded to the inquiry signal.

The reflection plates 4 reflect the electromagnetic wave outputted from the antenna 23 towards the Y direction for enabling the RFID tag 3 whose RFID tag face facing towards the Y direction to perform communication with the antenna 23. The "Y direction" is a direction covering the horizontal or almost horizontal direction with respect to the RFID tag 3 on the dolly 8, which indicates the propagating direction of the reflected light 7 that is the electromagnetic wave irradiated from the antenna 22 reflected at the reflection plate 4 towards the dolly 8 (width direction of the transporting path 5). A plurality of reflection plates 4-1 to 4-4 are arranged in the vertical direction on the side of the transmission path 5 in the electromagnetic wave irradiation area E2. The reflection plates 4-1 to 4-4 are arranged in a tilted manner so that the reflected waves 7 reflected at the reflective faces thereof travel towards the RFID tags on the dolly 8.

There are four reflection plates 4-1 to 4-4 illustrated in FIG. 1 and FIG. 2. However, the number of reflection plates is not limited to that. The number of the reflection plates 4 and the width in the height direction are determined based on the piled-up height of the RFID tags 3 that are piled up stereoscopically. That is, if the piled-up height of the RFID tags 3 becomes higher, the number of reflection plates 4 is increased or the width of the reflection plates 4 in the height direction is expanded. However, when the width of the reflection plates 4 becomes equal to the wavelength of the electromagnetic wave or 3/4, 1/2, or the like of the wavelength, the electromagnetic waves are attenuated due to resonance generated on the reflection plates 4, thereby deteriorating the electric power of the reflected waves. Therefore, it is desirable to set the width of the reflection plates 4 to be in the length longer than wavelength of the electromagnetic waves.

Each of the reflection plates 4-1 to 4-4 is attached to a wall face of a factory or the like, or to a strut (not shown) which is provided on the side of the transporting path 5 such as the product line, etc., by using metal fittings or the like with a certain angle so that the reflected waves 7 travel in the horizontal direction or almost in the horizontal direction.

Each of the reflection plates 4-1 to 4-4 is a rectangular plate made of metal or a rectangular plate made of a synthetic resin to which electromagnetic wave reflective agent is applied.

The reflection plates 4-1 to 4-4 of the first exemplary embodiment comprise a plurality of reflective faces (at positions that reflects the electromagnetic wave from the antenna). The plurality of reflective faces are located at the positions having different distances from the transporting path 5, i.e. located at different positions in the width direction (Y direction) of the transporting path 5. The plurality of reflective faces are arranged in the length direction of the reflective plates 4-1 to 4-4, i.e. arranged in a direction along the transporting path 5 (X direction in FIG. 1) . This will be described in the followings by referring to a specific example.

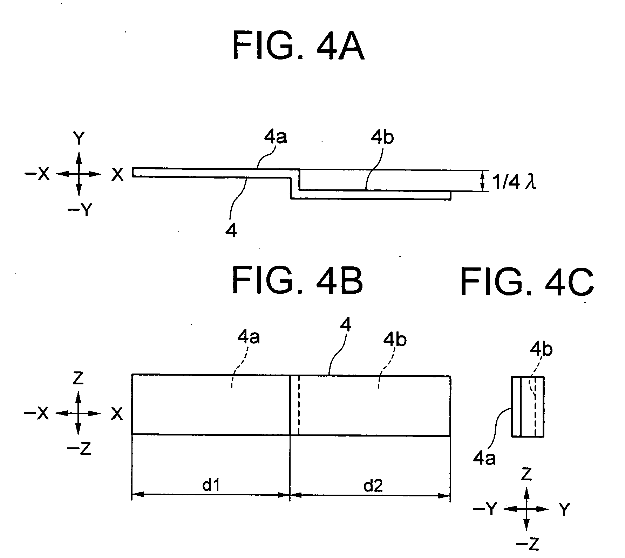

As shown in FIGS. 4A to 4C, the reflection plate 4 (each of the reflection plates 4-1 to 4-4) has two plane and flat reflective faces 4a and 4b. The reflective faces 4a and 4b of the reflection plate 4 are arranged along the length direction (X direction) of the transporting path 5. Assuming that the lengths of the reflective faces 4a, 4b positioned along the length direction (X direction) of the transporting path 5 are d1, d2, the reflective face 4a in a section d1 of each of the reflection plates 4-1 to 4-4 and the reflective face 4b in a section d2 are arranged at the positions that are shifted from each other by almost 1/4 wavelength of the electromagnetic wave used for the communication, in terms of the distance from the transporting path 5 in the width direction of (Y direction) of the transporting path 5. The two reflective faces 4a and 4b are arranged continuously in this case. However, the two may be arranged with a certain distance provided therebetween.

As described above, the two reflective faces 4a, 4b of the reflection plate 4 are at the positions shifted from each other almost by 1/4 wavelength of the electromagnetic waves used for the communication. Therefore, the interference areas formed by the reflected waves 7 that are reflected respectively by the reflective faces 4a, 4b of the reflection plates 4 (4-1 and 4-2, 4-3 and 4-4) which are adjacent to each other in the vertical direction are formed at positions that are mutually shifted in the width direction (Y direction) of the transporting path 5 by almost 1/4 wavelength of the electromagnetic waves used for the communication on the transporting path 5.

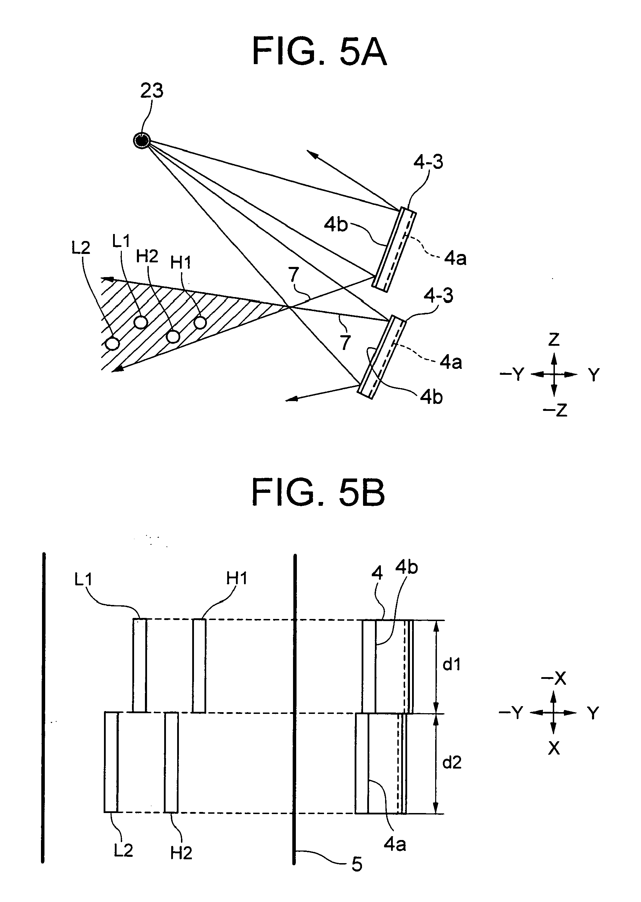

There will be described by referring specifically to the reflection plates 4-3 and 4-4 as the reflection plates 4 arranged adjacent to each other in the vertical direction as in FIG. 5A. However, it is also the same for the case where the reflection plates 4-1 and 4-2 are the reflection plates 4 that are adjacent to each other in the vertical direction. Regarding the adjacent reflection plates 4-3 and 4-4 in the vertical direction, when the reflected wave 7 of the electromagnetic wave reflected by one of the reflection plates, 4-3, and the reflected wave 7 of the electromagnetic wave reflected by the other reflection plates, 4-4, overlap in an area on the transporting path 5, the reflected waves (electromagnetic waves) 7 reflected by the adjacent reflection plates 4-3, 4-4 interfere with each other in the area on the transporting path 5, as indicated with oblique lines.

When the two reflected waves 7 reflected by the reflection plates 4-3, 4-4 interfere with each other in phase in the area on the transporting path 5, the electric field level at that point increases. An interference area H1 shown in FIG. 5A is an area where the electric field level is increased in the section d1 of the transporting path 5, and interference area H2 is an area where the electric field level is increased in the section d2 of the transporting path 5. In FIG. 5B, the section d1 (X direction) of the transporting path 5 corresponds to the length (X direction) of the reflective face 4a that constitutes a part of the reflection plate 4.

When the two reflected waves 7 reflected by the reflection plates 4-3, 4-4 interfere with each other in reversed-phase in an area on the transporting path 5, the electric field level at that point decreases. An interference area L1 shown in FIG. 5A is an area where the electric field level is decreased in the section d1 of the transporting path 5, and interference area L2 is an area where the electric field level is decreased in the section d2 of the transporting path 5. In FIG. 5B, the section d2 (X direction) of the transporting path 5 corresponds to the length (X direction) of the reflective face 4b that is the remaining part of the reflection plate 4.

The reflection plates 4-1 to 4-4 are arranged in parallel along the transporting path 5 (X direction), so that the interference areas L1, L2, H1, and H2 are formed along the length direction (X direction) of the transporting path 5.

In the exemplary embodiment, the reflective face 4b in the section d2 and the reflective face 4a in the section d1 are arranged to have a different distance with respect to the width direction (Y direction) of the transporting path 5. That is, the mutual positional relation between the reflective face 4b in the section d2 and the reflective face 4a in the section d1 is shifted by almost 1/4 wavelength of the electromagnetic waves used for the communication along the width direction (Y direction) of the transporting path 5.

Therefore, as shown in FIG. 5B, the interference area L1 in the section d1 and the interference area L2 in the section d2 are shifted from each other in the width direction (Y direction) of the transporting path 5 by almost 1/4 wavelength of the electromagnetic waves used for the communication. Further, the interference area H1 in the section d1 and the interference area H2 in the section d2 are shifted from each other in the width direction (Y direction) of the transporting path 5 by almost 1/4 wavelength of the electromagnetic waves used for the communication. Furthermore, the interference areas L1, L2 in the sections d1, d2 and the interference areas H1, H2 in the sections d1, d2 are shifted from each other in the width direction (Y direction) of the transporting path 5 by almost 1/4 wavelength of the electromagnetic waves used for the communication. Therefore, the interference areas L1, L2 and the interference areas H1, H2 do not overlap with each other in the length direction (X direction) and the width direction (Y direction) of the transporting path 5.

Therefore, even if the RFID tag 3 on the dolly 8 in the section d1 of the transporting path 5 is in the interference area L1 where the electric field level is low because of the mutual interference generated between the reflected waves 7 that are reflected by the reflective faces of the reflection plates 4-3 and 4-4, and the RFID tag 3 is incapable of performing communication with the antenna 23, it is possible for that RFID tag 3 on the dolly 8 to avoid the interference area L2 with the low electric field in the section d2 of the transporting path 5, and to perform communication with the antenna 23 in the area of the reflected waves 7 that are reflected by the reflective faces 4b of the reflection plates 4-3 and 4-4 in accordance with the move of the dolly 8.

Now, there is investigated the electric field level in the area within the section d2 of the transporting path 5, where the RFID tags 3 on the dolly 8 exist. In the section d2 of the transporting path 5, the area where the RFID tags 3 on the dolly 8 exist is an area where the degree of the mutual interference between the reflected waves 7 is small, or an area where the mutual interference hardly occurs, as indicated with oblique lines in FIG. 5A and FIG. 5B. The electric field level thereof is extremely larger than the electric field level in the interference area L1. Therefore, the RFID tags 3 on the dolly 8 can perform communication properly with the antennas 21 to 23 by moving into the section d2 of the transporting path 5.

When the width in the vertical direction in each of the reflection plates 4-1 to 4-4 becomes equal to the wavelength of the electromagnetic wave or 3/4, 1/2 of the wavelength, the electric field level is attenuated due to resonance of the electromagnetic waves generated on the reflection plates 4-1 to 4-4, thereby deteriorating the electric power of the reflected waves. Therefore, the width in the vertical direction of each of the reflection plates 4-1 to 4-4 is set to be in the length longer than the wavelength of the electromagnetic waves.

Each of the reader/writers 11 to 13 reads the information such as the identification numbers of the articles received by the antennas 21 to 23, and writes the information regarding the articles to the RFID tags 3 through the antennas 21 to 23.

Upon receiving data supplied from the computer terminal 15, each of the reader/writers 11 to 13 supplies the supplied data to the antennas 21 to 23. Inversely, when data is supplied through the antennas 21 to 23, each of the reader/writers 11 to 13 supplies the supplied data to the computer terminal 15.

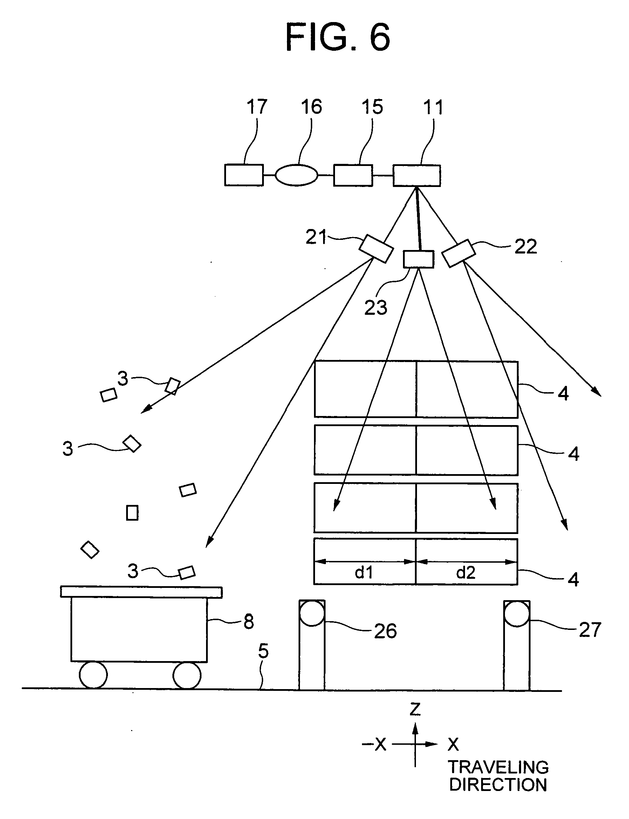

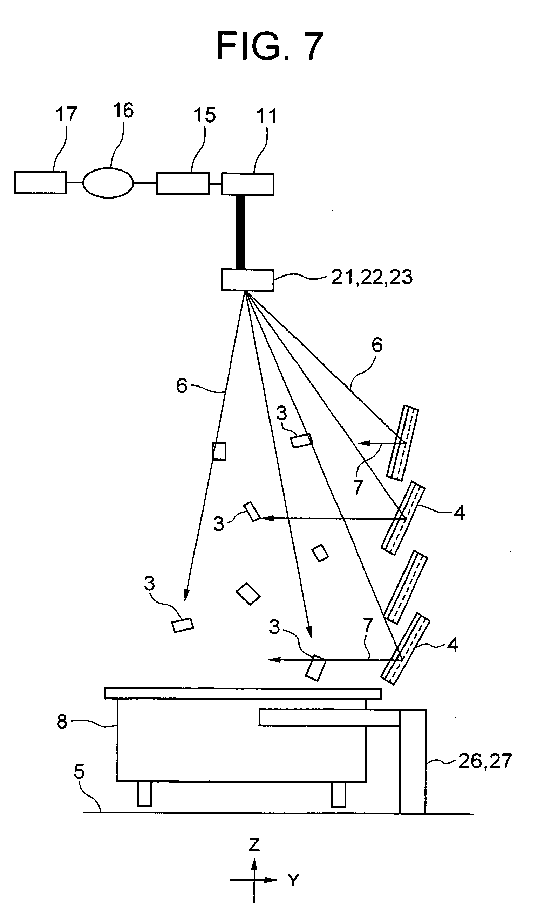

In the description provided above, the reader/writers 11 to 13 are provided by corresponding to the number of antennas 21 to 23, and the reader/writers 11 to 13 are switched by the antenna switching device 25 for switching the antennas 21 to 23 therethrough to perform communication with the RFID tags 3 on the dolly 8. However, it is not intended to be limited to that. As shown in FIG. 6 and FIG. 7, it is also possible to provide a single reader/writer 11 for a plurality of antennas 21 to 23, and the plurality of antennas 21 to 23 are switched by the single reader/writer 11 so as to perform communication between the switched antenna and the RFID tags 3 on the dolly 8. The structures shown in FIG. 6 and FIG. 7 other than the relation between the reader/writer 11 and the antennas 21 to 23 are the same as those shown in FIG. 1 and FIG. 2.

The door sensors 26 and 27 are door-type sensors for detecting the positions to check which position in the electromagnetic wave irradiation areas E1 to E3 the dolly 8 is in, and the door sensors 26, 27 are used to switch the antennas 21 to 23. Each of the door sensors 26 and 27 is arranged between the electromagnetic wave irradiation area E1 and the electromagnetic wave irradiation area E2, and between the electromagnetic wave irradiation area E2 and the electromagnetic wave irradiation area E3 respectively.

The door sensors 26 and 27 comprise sensor bars 26a and 27a, respectively. The sensor bars 26a and 27a are energized by the dolly 8 to rotate. When the sensor bar 26a of the door sensor 26 rotates, the door sensor 26 supplies, to the antenna switching device 25, a dolly-passing detection signal indicating that the dolly 8 has moved from the electromagnetic wave irradiation area E1 to the electromagnetic wave irradiation area E2.

Meanwhile, when the sensor bar 27a of the door sensor 27 rotates, the door sensor 27 supplies, to the antenna switching device 25, a dolly-passing detection signal indicating that the dolly 8 has moved from the electromagnetic wave irradiation area E2 to the electromagnetic wave irradiation area E3. The door sensors 26 and 27 are constituted to detect the dolly 8 physically by the sensor bars 26a and 27a, however, the structure thereof is not limited to that. The door sensors 26 and 27 may be sensors that detect the dolly 8 optically or electromagnetically instead of the types that detect it physically. The point is that any detection types can be employed as the door sensors 26 and 27, as long as it is possible with those sensors to detect the position of the dolly 8.

The antennas switching device 25 selectively switches the antennas 21 to 23 that cover the communication in the electromagnetic wave irradiation area E1, E2 or E3 where the dolly 8 enters, in accordance with the position of the dolly 8 detected by the door sensors 26 and 27.

When the dolly 8 is in the electromagnetic wave irradiation area E1, the dolly-passing detection signal is not supplied to the antenna switching device 25 from the door sensors 26 and 27. Thus, the antenna switching device 25 selects the reader/writer 11 and the antenna 21.

When the dolly-passing detection signal is supplied from the door sensor 26, the antenna switching device 25 switches the antenna 21 to the antenna 23, and switches the reader/writer 11 to the reader/writer 13.

When the dolly-passing detection signal is supplied from the door sensor 27, the antenna switching device 25 switches the antenna 23 to the antenna 22, and switches the reader/writer 13 to the reader/writer 12.

The computer terminal 15 comprises a ROM (Read Only Memory, not shown), a RAM (Random Access Memory, not shown), a CPU (Central Processing Unit, not shown), an HDD (Hard Disk Drive, not shown), and the like, and the computer terminal 15 controls the entire RFID communication system.

The computer terminal 15 repeatedly supplies a control signal to one of the reader/writers 11 to 13 which is switched by the antenna switching device 25 so that the reader 11 and the antenna 21, the reader/writer 12 and the antenna 22, or the reader/writer 13 and the antenna 23 perform communication with the RFID tags 3.

When data is supplied from one of the reader/writers 11 to 13, the computer terminal 15 transmits the supplied data to a server 17 through a network 16 that is a communication network.

The server 17 collects the data obtained by communicating with the RFID tags 3, and saves it in a form of a database. The server 17 uses the saved data for manufacture control and the like in a factory.

Next, operations of the RFID communication system according to the first exemplary embodiment will be described.

As shown in FIG. 1, the dolly 8 moves from the -X direction to the X direction on the transporting path 5. When the dolly 8 is in the electromagnetic wave irradiation area E1, the dolly-passing detection signal is not supplied to the antenna switching device 25 from the door sensors 26 and 27. Thus, the antenna switching device 25 selects the reader/writer 11 and the antenna 21.

The computer terminal 15 supplies the control signal to the antenna 21 through the reader/writer 11. The reader/writer 11 sends out the electromagnetic wave of an inquiry signal to the RFID tag 3 through the antenna 21, when the control signal is supplied from the computer terminal 15. The reader/writer 11 repeatedly sends out the inquiry signal from the antenna 21.

The irradiation face of the antenna 21 is directed towards the front face of the dolly 8 on the transporting path 5, and the RFID tag 3 whose RFID tag face faces in the Z direction shown in FIG. 1 receives the electromagnetic wave from the antenna 21.

The RFID tag 3 that has received the electromagnetic wave reads out the identification number and the like of the article from the memory of the tag IC 33 in response to the inquiry signal, and supplies it to the antenna 32. The antenna 32 transmits the identification number and the like on the electromagnetic wave.

The antenna 21 receives this electromagnetic wave, the reader/writer 11 reads the identification number and the like of the article, and supplies the readout identification number and the like to the computer terminal 15.

When the dolly 8 moves and energizes the sensor bar 26a of the door sensor 26, the sensor bar 26a rotates, and the door sensor 26 supplies a dolly-passing detection signal to the antenna switching device 25.

Upon receiving a supply of the dolly-passing detection signal from the door sensor 26, the antenna switching device 25 judges that the dolly 8 has moved from the electromagnetic wave irradiation area E1 to the electromagnetic wave irradiation area E2. The antenna switching device 25 switches the antenna 21 to the antenna 23, and switches the reader/writer 11 to the reader/writer 13.

When a control signal is supplied from the computer terminal 15, the reader/writer 13 repeatedly irradiates an inquiry signal (electromagnetic wave) through the antenna 23. Among the electromagnetic waves irradiated from the antenna 23, the electromagnetic waves in an area not spreading to the position of the reflection plates 4 are directly irradiated as direct waves from the antenna 23 towards the RFID tag 3 whose RFID tag face faces upwards on the platform track 8. With this, communication is performed between the antenna 23 and the RFID tag 3 by the direct waves.

Among the electromagnetic waves irradiated from the antenna 23, the electromagnetic waves reaching the reflection plates 4 are reflected, respectively, by the reflective faces 4a, 4b of the reflection plates 4 towards the RFID tag 3 on the dolly 8 in the horizontal direction or almost in the horizontal direction (Y direction) so as to propagate towards the RFID tag 3 on the dolly 8.

In the electromagnetic irradiation area E2, communication between the antenna 23 and the RFID tags 3 on the dolly 8 using the reflected waves other than the direct wave is performed in various forms. Those forms will be described in detail.

When the RFID tags 3 on the dolly 8 pass through the areas of the reflective faces 4a of the reflection plates 4-3, 4-4 (that is, in the section d1 of the transporting path 5), the reflected waves 7 that are reflected by the reflective faces 4a of the adjacent reflection plates 4-3 and 4-4 towards the horizontal direction or almost in the horizontal direction interfere with each other, thereby generating the interference area H1 where the electric field level of the reflected waves 7 is increased, and the interference area L1 where the electric field level of the reflected waves 7 is decreased.

When the RFID tags 3 on the dolly 8 are at an area other than the interference area H1 and the interference area L1, the antenna 23 and the RFID tags 3 on the dolly 8 perform communication by utilizing the reflection at the reflective faces 4a of the reflection plates 4-3 and 4-4.

When the RFID tags 3 on the dolly 8 are in the interference area L1, the electric field level becomes lower than the level that is necessary for performing communication. Thus, the RFID tags 3 on the dolly 8 in the interference area L1 is moved without performing communication between the antenna 23 to the area of the reflective faces 4b of the reflection plates 4-3, 4-4 (that is, the section d2 of the transporting path 5) in accordance with the move of the dolly 8.

In the case where the RFID tags 3 on the dolly 8 without performing communication with the antenna 23 enter the section d2 of the transporting path 5, the wave environment of the reflected waves 7 that are reflected by the adjacent reflection plates 4-3, 4-4 in the horizontal direction or almost in the horizontal direction is different from that of the case in the section d1 of the transporting path 5. That is, the reflective faces 4b are at the positions that are shifted by almost 1/4 wavelength of the electromagnetic waves used for the communication in the width direction of the transporting path 5 with respect to the reflective faces 4a of the reflection plates 4-3, 4-4 in the section d1 of the transporting path 5.

Therefore, the interference area L2 and the interference area H2 generated in the section d2 of the transporting path 5 are shifted in the width direction of the transporting path 5 by almost 1/4 wavelength of the electromagnetic waves used for the communication, with respect to the interference area L1 and the interference area H1 generated in the section d1 of the transporting path 5.

Under such wave environment of the reflected waves 7, even though the RFID tags 3 on the dolly 8 are incapable of communicating with the antenna 23 because of the interference area L1 in the section d1 of the transporting path 5, the REID tags 3 on the dolly 8, when being moved to the section d2 of the transporting path 5, can avoid the interference area L2 where the electric field level is decreased in the section d2 of the transporting path 5 and come to the area of the reflected waves 7 that are reflected by the reflection plates 4-3, 4-4 in the horizontal direction or almost in the horizontal direction.

Therefore, even though there is no communication performed between the RFID tags 3 on the dolly 8 and the antenna 23 in the section d1 of the transporting path 5, communication can be performed between the RFID tags 3 and the antenna 23 when entering the section d2 of the transporting path 5, by using the reflection plates 4-3, 4-4 (through the propagated reflected waves 7 that are reflected by the reflection plates 4-3, 4-4).

The RFID tag 3 that has received the reflected wave 7 reads out the identification number and the like of the article from the memory of the tag IC 33 in response to the inquiry signal, and supplies it to the antenna 32. The antenna 32 transmits the identification number and the like on the electromagnetic wave. The electromagnetic wave reflects at the reflection plate 4 and reaches the antenna 23.

The antenna 23 receives this electromagnetic wave, and the reader/writer 11 reads the identification number and the like in the RFID tag 3. Then, the reader/writer 11 supplies the readout identification number and the like to the computer terminal 15.

When the dolly 8 moves and energizes the sensor bar 27a of the door sensor 27, the sensor bar 27a rotates, and the door sensor 27 supplies a dolly-passing detection signal to the antenna switching device 25.

Upon receiving a supply of the dolly-passing detection signal from the door sensor 27, the antenna switching device 25 judges that the dolly 8 has moved from the electromagnetic wave irradiation area E2 to the electromagnetic wave irradiation area E3. The antenna switching device 25 switches the antenna 23 to the antenna 22, and switches the reader/writer 13 to the reader/writer 12.

The antenna 22 repeatedly sends out the electromagnetic wave of the inquiry signal to the RFID tag 3. The RFID tag 3 whose RFID face faces towards the Z direction receives the electromagnetic wave as the direct wave 6.

The RFID tag 3 that has received the direct wave 6 reads out the identification number and the like of the article from the memory of the tag IC 33 in response to the inquiry signal, and supplies it to the antenna 32. The antenna 32 transmits the identification number and the like on the electromagnetic wave.

The antenna 22 receives this electromagnetic wave, and the reader/writer 12 reads the identification number and the like of the article, and supplies the readout identification number and the like to the computer terminal 15.

Therefore, during the period where the dolly 8 moves through the electromagnetic wave irradiation areas E1 to E3, each of the antennas 21 to 23 performs communication with the RFID tag 3 that faces towards the Z direction and the RFID tag 3 that faces towards the Y direction from the X direction (the front of the dolly 8), and the RFID tag 3 that faces towards the Z direction from the back of the dolly 8. In this way, the antennas 21 to 23 perform communication with all the RFID tags 3.

When the dolly 8 further moves to go out of the electromagnetic wave irradiation area E3 of the antenna 22, the communication between the RFID tags 3 and the antennas 21 to 23 is completed. The computer terminal 15 transmits the supplied identification number and the like of the articles to the server 17 via the network 16.

In the first exemplary embodiment, the reflective faces of the reflection plates arranged along the length direction of the transporting path 5 are placed at the positions with a different distance from the transporting path (that is, a plurality of reflective faces arranged along the length direction of the transporting path 5 are arranged to be shifted from each other in the width direction (Y direction) of the transporting path 5 by almost 1/4 wavelength of the electromagnetic waves used for the communication). Therefore, even if the RFID tags on the dolly become incapable of communication with the antennas in the front-half area (section d1) of the transporting path 5, it is possible for the RFID tags on the dolly and the antennas to perform communication in the latter-half area (section d2) of the transporting path 5. As a result, communication between the RFID tags on the dolly and the antennas can be performed securely.

Specifically, in the electromagnetic wave irradiation area E2, the interference area with low electric field level and the interference area with high electric field level, which are generated due to interference between the reflected waves 7 reflected by the reflection plates 4, appear alternately along the transporting path 5 in the sections d1 and d2 of the transporting path 5.

When the dolly 8 travels forward on the transporting path 5, the interference area L1 with the low electric field level in the section d1 comes at a position shifted by 1/4 wavelength in the width direction of the transporting part 5 as the interference area L2 with a weakened electric field level in the section d2.

Therefore, even if the RFID tags 3 pass through the area L1 with the low electric field level and cannot receive the reflected wave 7, the RFID tags 3 can surely receive the reflected wave 7 since the tags 3 necessarily pass a point where the electric field level is recovered. Thus, the antenna 23 can perform communication securely with all the RFID tags 3.

Further, the irradiation faces of the antennas 21, 22 face towards different directions and, in addition, the antenna 23 irradiates the electromagnetic wave to the RFID tags 3 by using the reflection plates 4. Therefore, even if a plurality of RFID tags 3 are dispersed stereoscopically in a wide range and the RFID tag faces face towards random directions, the antennas 21 to 23 can securely perform communication with all the RFID tags 3.

Since the antenna switching device 25 can switch the antennas 21 to 23 based on the position of the dolly 8 that passes on the production line 5, it is possible to perform communication securely between the antennas 21 to 23 and the RFD tags 3 by following the RFID tags 3 that move in accordance with the move of the dolly 8 with the plurality of antennas 21 to 23.

### (Second Embodiment)

An RFID communication system according to a second exemplary embodiment comprises reflection plates provided along the transmission path on both sides thereof.

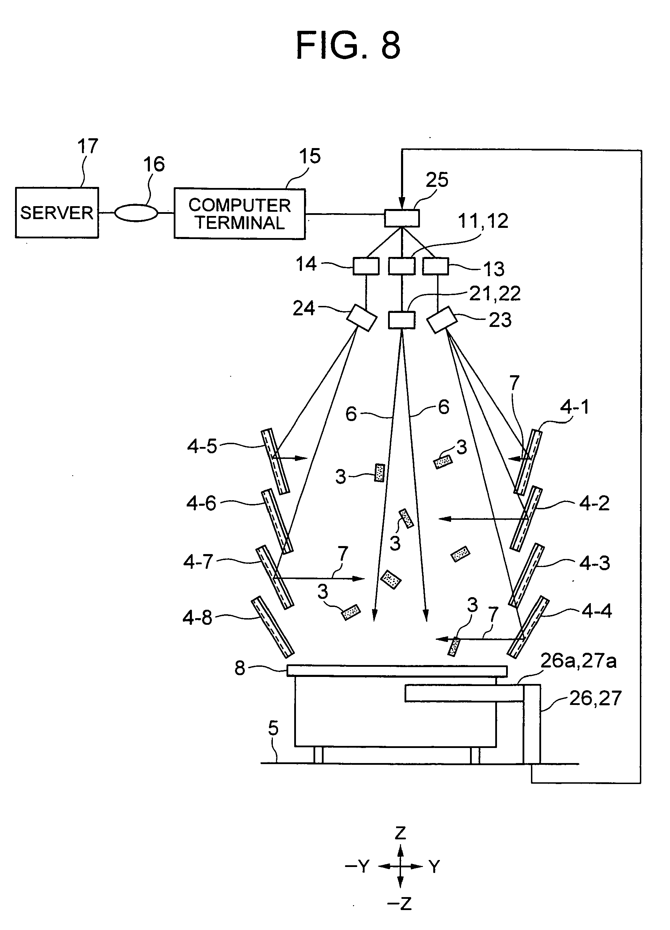

As shown in FIG. 8, the RFID communication system according to the second exemplary embodiment comprises RFID tags 3, antennas 21 to 24, reflection plates 4-1 to 4-8, and reader/writers 11 to 14.

The RFID tags 3, the antennas 21 to 23, the reflection plates 4-1 to 4-4, and reader/writers 11 to 13 are the same as those of the first exemplary embodiment. In the second exemplary embodiment, the antenna 24, the reflection plates 4-5 to 4-8, and the reader/writer 14 are added.

When the width of the transporting path 5 such as a production line is wide or when the level of the transmitted electromagnetic wave irradiated from the antenna 23 is low, there may be formed an area where the reflected wave 7 cannot reach, if the reflection plates 4 are provided only on one side.

Even in such a case, it is possible for the antennas 21 to 24 to perform communication securely with the RFID tags 3 by adding one antenna (the antenna 24) and the reflection plates 4 (arranging the reflection plates 4-1 to 4-8 along the transporting path 5 on both sides thereof).

The antenna 24 is used for communicating with the RFID tags 3 by the reflected waves 7 through irradiating the electromagnetic waves towards the reflection plates 4-5 to 4-8. The antenna 24 is arranged above the transporting path 5 in parallel with the antennas 21 to 23, and the irradiation face is tilted towards the reflection plates 4-5 to 4-8 side.

Each of the reflection plates 4-5 to 4-8 is the plate equivalent to the reflection plates 4-1 to 4-4. That is, each of the reflection plates 4-5 to 4-8 is a rectangular plate made of metal or a rectangular plate made of a synthetic resin to which electromagnetic wave reflective agent is applied. The reflection plates 4-5 to 4-8 are arranged in such a manner that the reflective faces thereon in the section d1 of the transporting path 5 and the reflective faces in the section d2 of the transporting path 5 are shifted from each other by almost 1/4 wavelength of the electromagnetic waves used for the communication.

The reflection plates 4-5 to 4-8 are arranged above the transporting path 5 almost in parallel to the reflection plates 4-1 to 4-4 at the positions almost symmetrical with the reflection plates 4-1 to 4-4 with respect to the production line 5. Mainly, the reflection plates 4-5 to 4-8 reflect the electromagnetic waves from the antenna 24.

Each of the reflection plates 4-1 to 4-8 is attached to both of face-to-face wall faces of a factory or the like, or struts which are provided on both sides by facing with each other with the transporting path 5 such as the product line interposed therebetween, for example, by using metal fittings or the like.

The antenna 23 performs communication with the RFID tags 3 on the right-half of the dolly 8 by utilizing the reflected waves 7, and the antenna 24 performs communication with the RFID tags 3 on the left-half of the dolly 8 by utilizing the reflected waves 7.

The reader/writer 14 is the same as the reader/writers 11 to 13, and it reads the information such as the identification numbers of the articles received by the antenna 24, and writes the information regarding the articles to the RFID tags 3.

Next, operations of the RFID communication system according to the second exemplary embodiment 2 will be described.

When the dolly 8 moves from the electromagnetic wave irradiation area E1 and energizes the sensor bar 26a of the door sensor 26, the door sensor 26 supplies a dolly-passing detection signal to the antenna switching device 25.

Upon receiving a supply of the dolly-passing detection signal from the door sensor 26, the antenna switching device 25 judges that the dolly 8 has moved from the electromagnetic wave irradiation area E1 to the electromagnetic wave irradiation area E2. The antenna switching device 25 then switches the antenna 21 to the antennas 23, 24, and switches the reader/writer 11 to the reader/writers 13, 14.

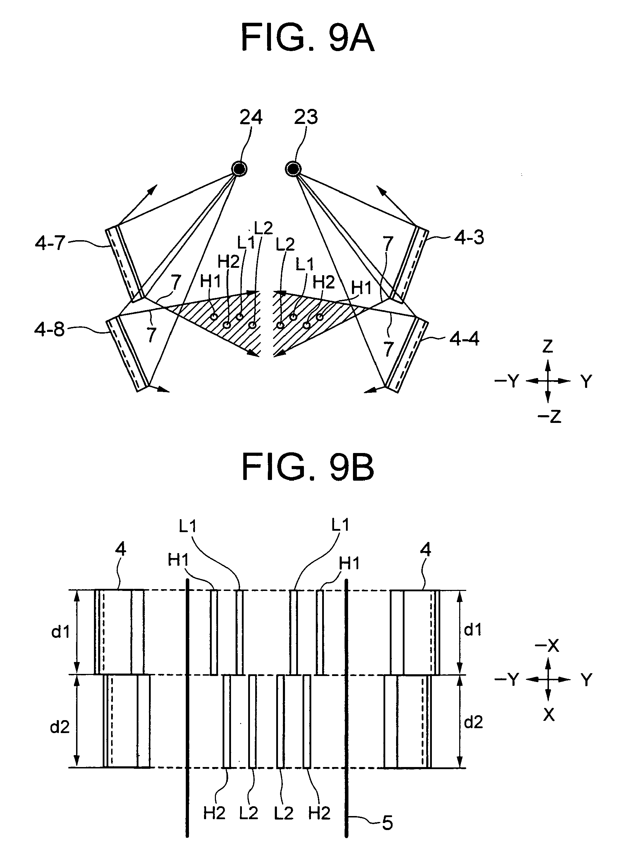

FIG. 9A is an illustration viewed from the X direction, and FIG. 9B is an illustration viewed from the Z direction. FIGS. 9A and 9B illustrate the state where the electromagnetic waves are diffused by the reflection plates 4-1 to 4-8 placed two each on both sides, and the respective reflected waves 7 interfere with each other.

Each of the electromagnetic waves from the antenna 23 or the antenna 24 is reflected and diffused by the reflection plates 4-1 to 4-8. Among the reflection plates 4-1 to 4-4, the reflected wave 7 reflected by the upper-side reflection plate 4 and the reflected wave 7 reflected by the lower-side reflection plate 4 overlap with each other, thereby generating an interference area.

Further, among the reflection plates 4-5 to 4-8, the reflected wave 7 reflected by the upper-side reflection plate 4 and the reflected wave 7 reflected by the lower-side reflection plate 4 overlap with each other, thereby generating an interference area.

FIG. 9A shows an example viewed from the X direction when the upper-side reflection plates 4 are the reflection plates 4-3, 4-7, and the lower-side reflection plates are the reflection plates 4-4, 4-8. FIG. 9B shows an illustration viewed from the Z direction.

The areas shown with oblique lines in FIG. 9A indicate an interference area where the reflected wave 7 reflected by the reflection plate 4-3 and the reflected wave 7 reflected by the reflection plate 4-4 overlap with each other, and an interference area where the reflected wave 7 reflected by the reflection plate 4-7 and the reflected wave 7 reflected by the reflection plate 4-8 overlap with each other.

Further, each of the interference areas H1 and H2 shown in FIGS. 9A and 9B shows the interference area in the sections d1 and d2, where the electric field level is increased due to interference in phase. Further, each of the interference areas L1 and L2 shows the interference area in the sections d1 and d2, where the electric field level is decreased due to interference in reversed-phase. The interference areas H1, H2, L1, and L2 are generated in parallel along the transporting path 5.

Among the RFID tags 3 whose RFID tag faces face towards the Y direction, the RFID tags 3 that have passed through the area other than the interference area L1 in the section d1 of FIG. 9B receive the reflected waves 7 from the reflection plates 4-1 to 4-8 in the section d1.

In the section d1, the interference area L1 generated when the reflected waves 7 reflected by the reflection plates 4-3, 4-4 overlap with each other, and the interference area L2 generated in the section d2 are located on the reflection plates 4-5 to 4-8 side on the transporting path 5, i.e. located in the area shifted from each other in the width direction (Y direction) of the transporting path 5. Therefore, those interference areas do not overlap with each other in the length direction (X direction) of the transporting path 5.

In the section d1, the RFID tags 3 that have passed the reflection plates 4-1 to 4-4 side and passed through the interference area L1 pass the area in the section d2 according to the move of the dolly 8, where the electromagnetic wave of the electric field level is improved (that is, pass through the area other than the interference area L2).

Therefore, even though the RFID tags 3 pass the interference area L1 on the reflection plates 4-1 to 4-4 side as well as the interference area L1 on the reflection plates 4-5 to 4-8 and cannot receive the reflected waves 7 therein, it is possible for that RFID tags 3 to receive the reflected waves 7 since the tags 3 pass the point in the interference area with the improved electric field level in the section d2.

In the second exemplary embodiment, the antennas 23, 24, and the reflection plates 4-1 to 4-8 are provided on both sides of the production line 5.

Therefore, even when the width of the transporting path 5 is wide or when the level of the electromagnetic wave irradiated from the antenna 23 is low, so that there is formed an area where the reflected waves 7 cannot reach only with the reflection plates 4-1 to 4-4 on one side, it becomes possible with the antennas 23 and 24 to perform communication securely with the RFID tags 3.

### (Third Embodiment)

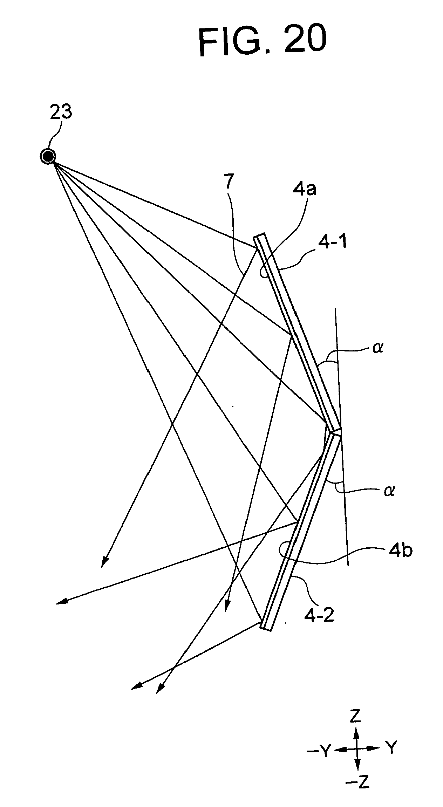

A third exemplary embodiment shown in FIG. 20 shows a case where the layout of the reflective faces 4a, 4b formed on the reflection plates 4-1, 4-2 are changed.

In the third exemplary embodiment 3 shown in FIG. 20, the reflective faces 4a, 4b formed on the reflection plates 4-1, 4-2 are arranged with a tilt angle α with respect to the perpendicular direction. It is desirable for the reflective faces 4a, 4b formed on the reflection plates 4-1, 4-2 to be arranged on the adjacent areas (that is, arranged adjacently in the areas located in the vertical direction). Further, it is desirable for the reflective faces 4a, 4b formed on the reflection plates 4-1, 4-2 to be combined in a tapered shape that spreads towards the articles on the transporting path.

Furthermore, it is desirable for the tilt angle α of the reflective faces 4a, 4b with respect to the perpendicular direction to be within the range of 1/2 to 1/4 of the wavelength of the frequency that is being used. However, it is not limited to that. In the area of the transporting path on which the articles are transported, there are not only the electromagnetic waves irradiated from the antennas used for the communication but also the electromagnetic waves for controlling the dolly that moves on the transporting path and the harmonics thereof, and those waves may mutually interfere with each other and reflected by the reflective faces 4a, 4b. Thus, even if the tilt angle α of the reflective faces 4a and 4b is set in an experimental laboratory, the numerical value thereof is merely an ideal value. Therefore, it is necessary to consider the state of the electromagnetic waves in the area where the reflective faces are actually provided, so that the tilt angle α of the reflective faces 4a and 4b are not limited to the above-described value.

As a result of an experiment where the electromagnetic waves from the antenna 23 were reflected by the reflective faces 4a, 4b of the third exemplary embodiment shown in FIG. 20, it was found that the reflective faces 4a, 4b of the third exemplary embodiment were able to reduce the area where the electric field intensity becomes small on the transporting path and to distribute the electric field on the transporting path uniformly, while maintaining it to the intensity necessary for communication.

The effects obtained by the third exemplary embodiment were confirmed as a result of the experiment, and its technical analysis is not performed yet. However, it is estimated that a phenomenon is occurred based on a principal analogous to a principal of the taper slot antenna, and the spread of the reflective faces 4a, 4b at the angle α allows distribution of the electric field uniformly in a wide range of area while maintaining the electric field on the transporting path to the intensity necessary for communication. FIG. 20 illustrates the case where the reflective faces 4a and 4b are placed on one side of the transporting path. However, the layout is not limited to that. The reflective faces 4a and 4b shown in FIG. 20 may be placed on both sides of the transporting path.

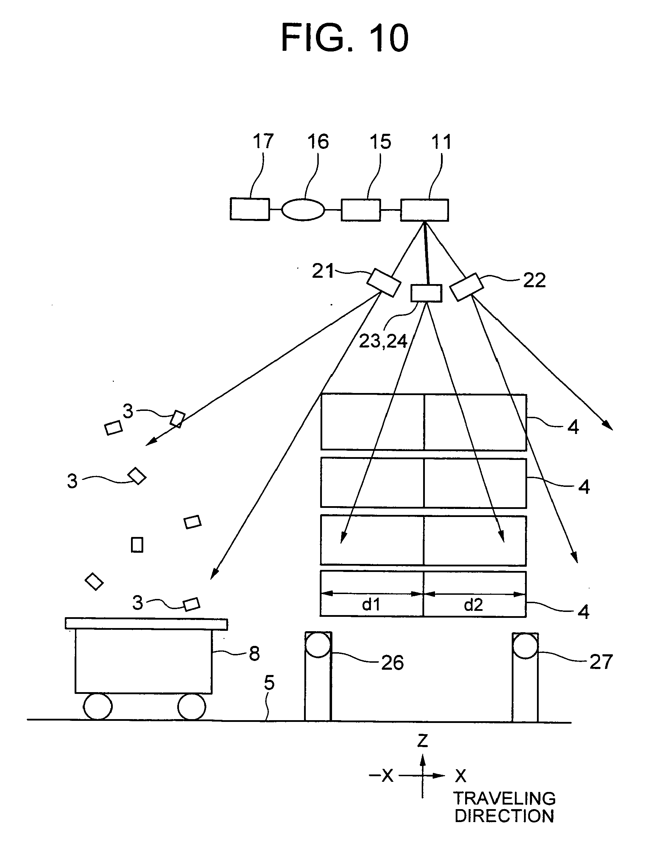

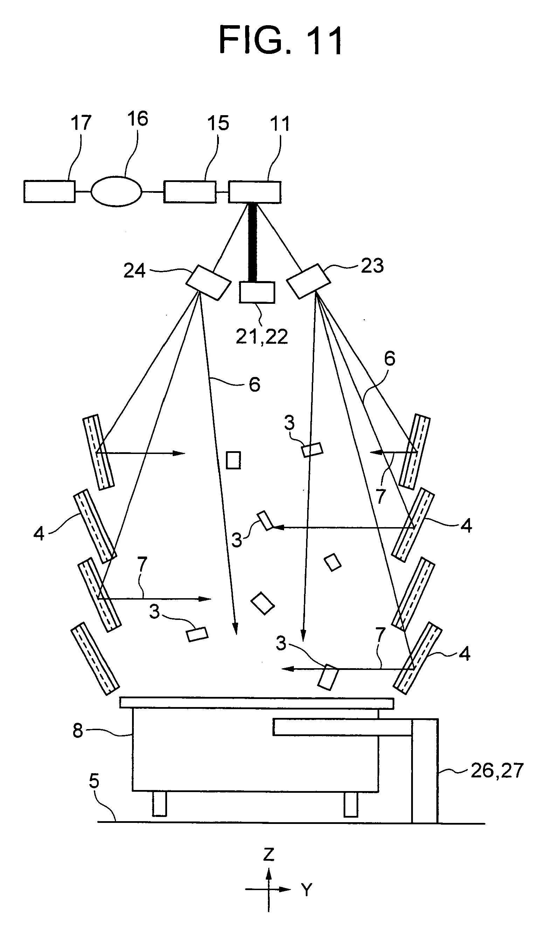

In the description provided above, the reader/writers 11 to 14 are provided by corresponding to the number of antennas 21 to 24, and the reader writers 11 to 14 are switched by the antennas switching device 25 for switching the antennas 21 to 24 therethrough to perform communication between the RFID tags 3 on the dolly 8. However, it is not intended to be limited to that. As shown in FIG. 10 and FIG. 11, it is also possible to provide a single reader/writer 11 for a plurality of antennas 21 to 24, and the plurality of antennas 21 to 24 are switched by the single reader/writer 11 so as to perform communication between the switched antenna and the RFID tangs 3 on the dolly 8. The structures shown in FIG. 10 and FIG. 11 other than the relation between the reader/writer 11 and the antennas 21 to 24 are the same as those shown in FIG. 8 and FIG. 9.

Various forms can be considered for embodying the present invention, and the structures thereof are not limited to those of the exemplary embodiments described above.

For example, the number of reflective faces of the reflection plates 4 positioned along the length direction (X direction) of the transporting path 5 is not limited to two but may be the plural. When there are two reflective faces of the refection plate 4, the two reflective faces are arranged at positions shifted from each other by almost 1/4 wavelength of the electromagnetic waves used for the communication in the width direction (Y direction) of the transporting path 5. The reflection plate 4 may have three or more (that is, N-number of reflective faces: N is a natural number, N≧3) of the reflective faces. In that case, the plurality of reflective faces are arranged at positions shifted from each other at a pitch that is obtained by dividing the length of almost 1/4 of the electromagnetic waves used for the communication by (N-1), i.e. by at a pitch of 1/4. {1/(N-1)}, in the width direction (Y direction) of the transporting path 5.

When each of the reflection plates 4 has the N-number of reflective faces in the longitudinal direction of the reflection plates 4, the interference areas where the reflected wave 7 that is reflected by the upper-side reflection plate 4 and the reflected wave 7 reflected by the lower-side reflection plate 4 overlap with each other are generated at N-number of different positions in accordance with the respective faces.

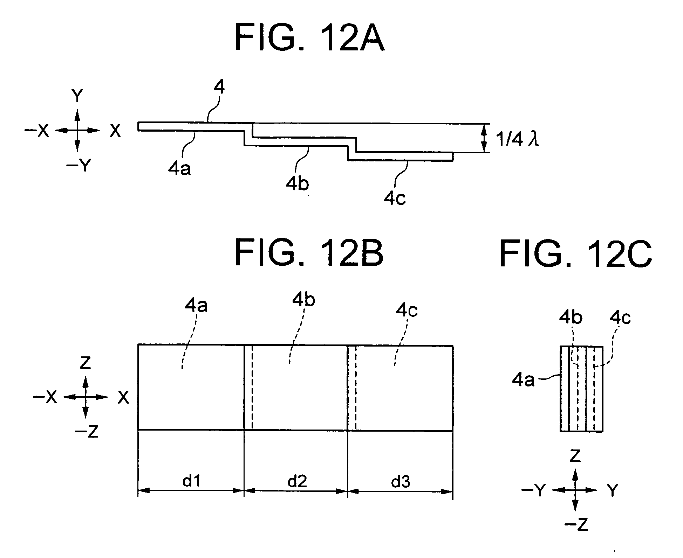

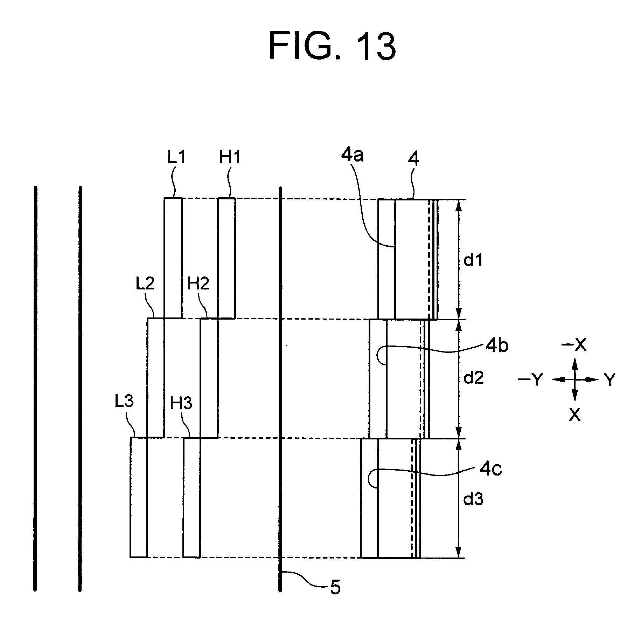

FIG. 12 shows the case of the reflection plate 4 with N=3, as a way of example. In this case, the interference areas L1, L2, L3, H1, H2, and H3 are generated at three different positions as shown in FIG. 13. The reflective face 4a in the section d1 of the transporting path 5 is arranged at a position shifted from the reflective face 4b in the section d2 in the width direction of the transporting path 5 by almost 1/8 wavelength of the electromagnetic waves used for the communication, and shifted from the reflective face 4c in the section d3 in the width direction of the transporting path 5 by almost 1/4 wavelength of the electromagnetic waves used for the communication .

Therefore, the interference areas L1 and H1 in the section d1 (which are generated when the reflected waves 7 reflected by the reflective faces 4a of the adjacent reflection plates 4 in the vertical direction interfere with each other) do not overlap with the interference areas L2 and H2 in the section d2 (which are generated when the reflected waves 7 reflected by the reflective faces 4b of the adjacent reflection plates 4 in the vertical direction interfere with each other) or the interference areas L3 and H3 in the section d3 (which are generated when the reflected waves 7 reflected by the reflective faces 4c of the adjacent reflection plates 4 in the vertical direction interfere with each other). Thus, even if communication cannot be performed in one of the sections, it is possible to perform communication in other sections.

By providing N-number of reflective faces as described above, the points with low electric field level can be dispersed. Therefore, it is possible to shorten the distance where the RFID tags 3 on the dolly 8 become incapable of communication.

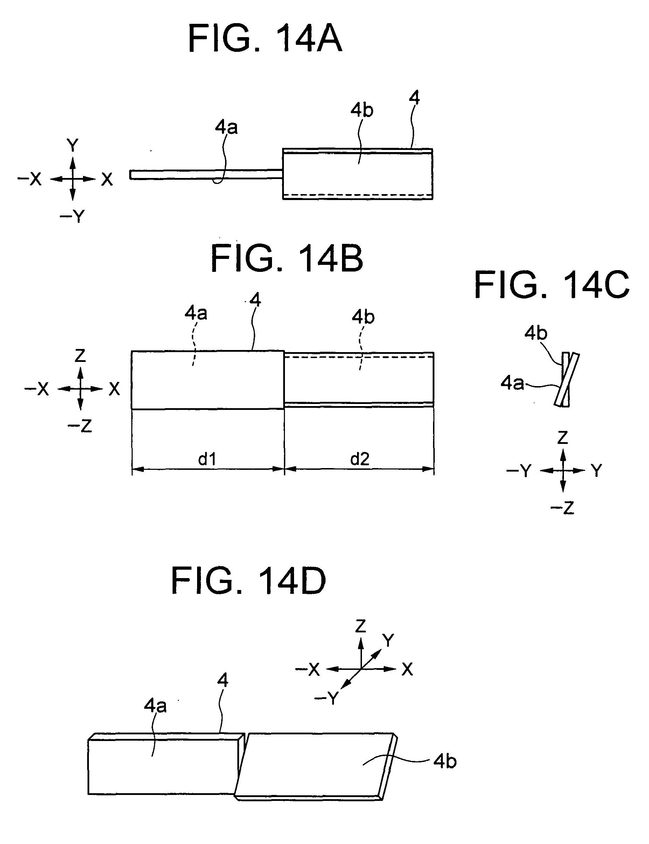

Further, the reflection plate 4 may be formed by joining a plurality of reflective faces at different angles from each other, as shown in FIGS. 14A - 14D.

The reflection plates 4 are arranged on the side of the transporting path 5 while making the angles of two reflective faces 4a and 4b that are positioned in the length direction (X direction) different from each other with respect to the Z direction, as shown in FIGS. 14.

With the structure shown in FIGS. 14, the interference areas L1 and L2 with low electric field level, which are generated when the reflected waves reflected by the reflection faces of the vertically adjacent reflection plates 4 interfere with each other, can be generated at the positions shifted from each other in the vertical direction (the height direction: Z direction). Therefore, it is possible to avoid overlap of the above-described interference areas L1, L2 between the sections d1 and d2 both in the width direction (Y direction) and the height direction (Z direction) of the transporting path 5.

However, when the angles of the two reflective faces are too large, the reflected waves 7 become shifted from the RFID tags 3. Thus, the angles of the two reflective faces are considered sufficient to be at about 10 degrees, and are set at that value.

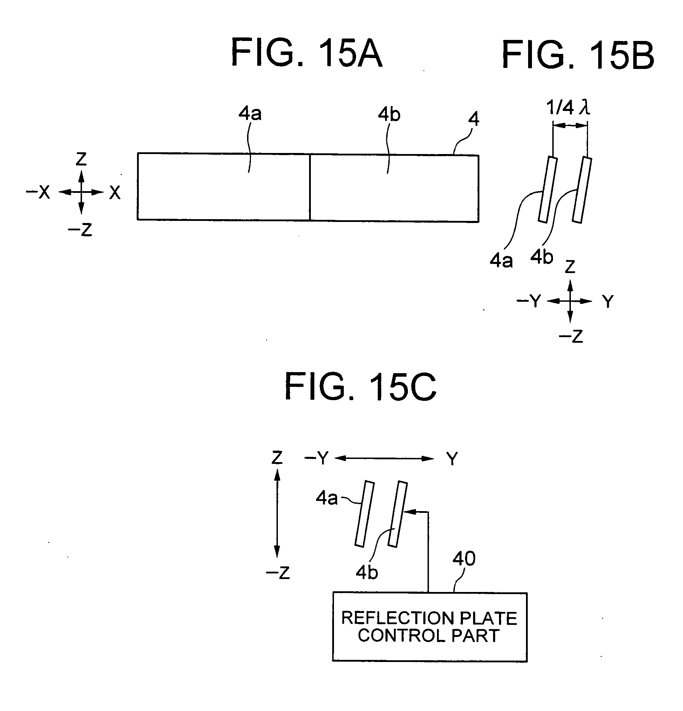

In the first and second exemplary embodiments, the interference areas generated due to interference between the reflected waves are improved by arranging the reflective faces of the reflection plates 4 that reflect the electromagnetic waves from the antennas at the positions determined by considering the wavelength of the electromagnetic waves used for the communication. However, it is not limited to that. As shown in FIG. 15 to FIG. 17, the interference areas generated due to interference between the reflected waves may also be improved by making the positions of the reflective faces adjustable.

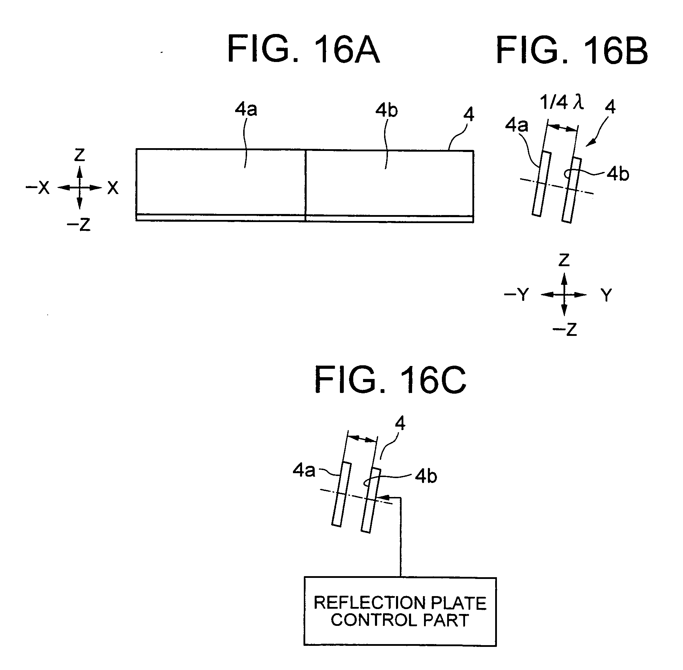

In FIG. 15, the reflective faces 4a and 4b are reciprocally moved in the width direction (Y direction) of the transporting path 5 by a reflection plate control part 40, while keeping the distance of almost 1/4 wavelength of the electromagnetic waves used for the communication. In FIG. 16, the reflective faces 4a and 4b are reciprocally moved in the Z-Y quadrant, that is, in the oblique direction and the width direction (Y direction) of the transporting path 5 by the reflection plate control part 40, while keeping the distance of almost 1/4 wavelength of the electromagnetic waves used for the communication.

With the exemplary embodiments shown in FIG. 15 and FIG. 16, the interference areas L1, L2, H1, and H2 generated due to interference between the reflected waves on the transporting path 5 can be shifted in the width direction and the oblique direction of the transporting path 5. Thus, it is possible to change the electromagnetic wave areas irradiated by the reflected waves 7 for the RFID tags 3 of the articles that are loaded distortedly on one side of the dolly 8, for example, depending on the loaded state of the articles on the dolly 8. The structures shown in FIG. 15 and FIG. 16 are not limited to be used for dealing with the loaded state of the articles. Those structures can be employed as necessary, when it is required to change the interference areas L1, L2, H1, and H2 generated due to interference between the reflected waves 7.

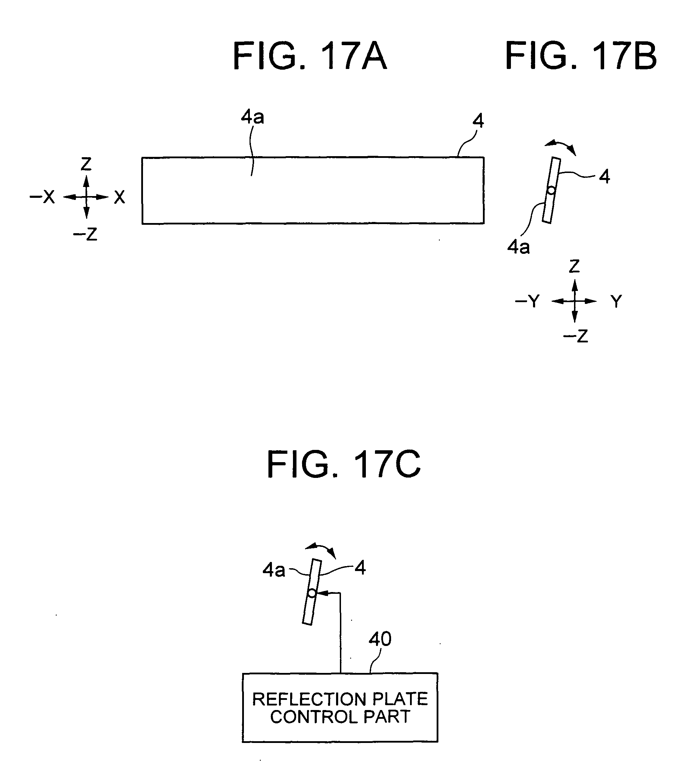

As shown in FIG. 17, it is also possible to make the reflection plates 4 reciprocally rotate around the horizontal axis (X direction). In FIG. 17, the reflection plate 4 is illustrated with a single reflective face. However, the reflection plate 4 may have a plurality of reflective faces, and the reflective faces may be arranged at the positions shifted from each other by almost 1/4 wavelength of the electromagnetic waves used for the communication.

In the case of FIG. 17, it is sufficient for the rotation angle of the reflection plate 4 to be at about 10 degrees. The reflection plate control part 40 sets the rotation angle of the reflection plate 4 at about 10 degrees, and rotates the reflection plate 4. In the cases shown in FIG. 15 and FIG. 16, there may only be a single reflection plate 4 provided therein as well.

With the structures shown in FIG. 15 - FIG. 17, it is possible to perform communication securely between the RFID tags on the dolly and the antennas with a structure other than such structure where the reflective faces of the reflection plates 4 that reflect the electromagnetic waves from the antennas are arranged at the positions determined by considering the wavelength of the electromagnetic waves used for the communication.

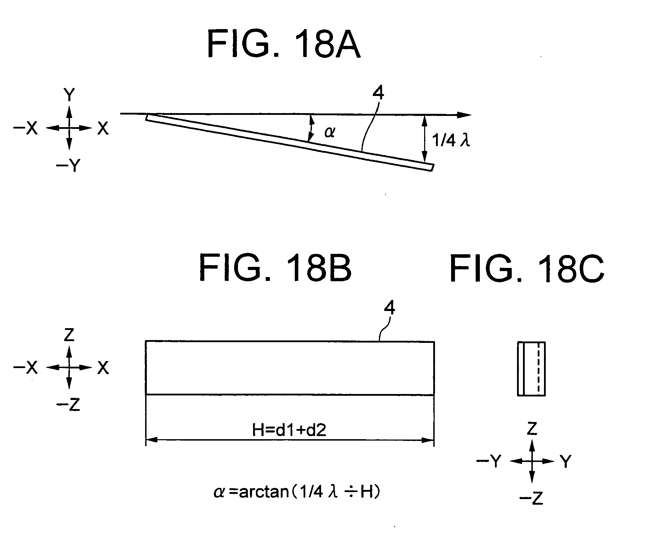

In the first and second exemplary embodiments, when the reflective faces of the reflection plates 4 that reflect the electromagnetic waves from the antennas are arranged at the positions by considering the wavelength of the electromagnetic waves used for the communication, the pitch of the plurality of reflective faces is set in a size to correspond to almost 1/4 wavelength of the electromagnetic waves used for the communication, for the entire length of the reflection plate in the length direction (X direction). However, it is not limited to that. As shown in FIGS. 18A to 18C, the reflection plate 4 may be arranged at a preset angle α with respect to the traveling direction of the dolly 8. The angle α is set as α = arctan [(1/4 wavelength of the electromagnetic wave) /H], and the reflection plate 4 is moved obliquely and placed with a distance of 1/4 wavelength of the electromagnetic waves. H is the length (d1+d2) of the reflection plate 4 in the length direction (X direction).

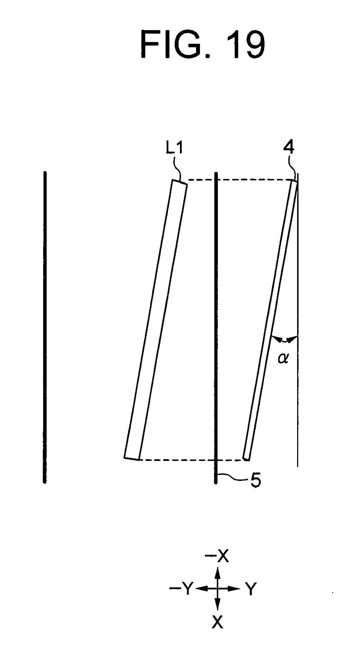

When the reflection plates 4 are placed with the angle α with respect to the traveling direction of the dolly 8, as shown in FIG. 19, the interference area L1 generated due to the interference between the reflected wave 7 reflected by the upper-side reflection plate 4 and the reflected wave 7 reflected by the lower-side reflection plate 4 is generated in parallel to the reflection plates 4 and obliquely with respect to the traveling direction of the dolly 8.

Therefore, when the dolly 8 travels forward on the transporting path 5 and crosses the interference area L1, and the RFID tags 3 on the dolly 8 become incapable of communication in the interference area L1, the RFID tags 3 become capable of communication after passing the interference area L1. As described, when the reflection plates 4 are arranged with the angle α with respect to the traveling direction of the dolly 8, the distance where the RFID tags 3 on the dolly 8 become incapable of communication can be shortened.

The structures of the reflection plates 4 according to the exemplary embodiments shown in FIG. 15 to FIG. 18 can be applied to instead of the reflection plates 4 according to the first and second exemplary embodiments.

In the above-described exemplary embodiments, the antenna switching device 25 switches the antennas 21 to 23. However, when the irradiation areas of each of the antennas 21 to 23 do not overlap with each other and no crosstalk is generated, it is unnecessary for the antenna switching device 25 to switch the antennas 21 to 23. Thus, it is unnecessary to provide the antenna switching device 25 and the door-sensors 26, 27 in such case.

The present invention is not limited to the RFID communication system used for logistics management systems. For example, it can be used for: a system for managing members and devices which are transported on belt conveyors, dollies, or the like; a system for managing members and devices which are stored in factories, warehouses, distribution channels, or the like; an individual recognition system using RFID tags; an enter/exit managing system; an animal recognition system using RFID tags; and an animal managing system.

This application is based upon and claims the benefit of priority from Japanese patent application No. 2006-160694, filed on June 9, 2006 and Japanese patent application No. 2007-130849, filed on May 16, 2007, the disclosure of which is incorporated herein in its entirety by reference.

## Claims

1. A wireless communication system which performs communication between a wireless tag attached to an article transported on a transporting path and an antenna that irradiates an electromagnetic wave towards the transporting path, the system comprising a reflection unit for reflecting the electromagnetic wave from the antenna to the wireless tag on the transporting path, wherein
the reflection unit comprises a plurality of reflective faces along a length direction of the transporting path, wherein
the reflective faces are located at positions for improving an interference area that is generated due to interference between reflected waves.

2. The wireless communication system as claimed in claim 1, wherein the reflective faces are arranged at positions in a width direction of the transporting path by considering wavelength of the electromagnetic wave used for the communication.

3. The wireless communication system as claimed in claim 2, wherein the plurality of reflective faces are arranged along the length direction of the transporting path.

4. The wireless communication system as claimed in claim 2, wherein the reflective faces are arranged as a single face along the length direction of the transporting path.

5. The wireless communication system as claimed in claim 3, wherein the plurality of reflective faces are arranged with different distances from the transporting path provided therebteween.

6. The wireless communication system as claimed in claim 5, wherein, when there are N-number (N is an integer of 3 or more) of the reflective faces, the N-number of reflective faces are arranged at positions shifted from each other in a width direction of the transporting path at a pitch of almost 1/4 wavelength of the electromagnetic wave used for the communication.

7. The wireless communication system as claimed in claim 3, wherein the plurality of reflective faces are arranged with different tilt angles.

8. The wireless communication system as claimed in claim 1, wherein the reflective faces reciprocally move at least either in a width direction or an oblique direction of the transporting path.

9. The wireless communication system as claimed in claim 1, wherein the reflective faces reciprocally rotate around a horizontal axis.

10. The wireless communication system as claimed in claim 1, wherein the reflective faces are arranged with an angle with respect to a direction that crosses with the length direction of the transporting path.

11. The wireless communication system as claimed in claim 1, wherein the reflective faces are arranged with a tilt angle with respect to a perpendicular direction.

12. The wireless communication system as claimed in claim 1, wherein the reflective faces are arranged in adjacent areas with a tilt angle with respect to a perpendicular direction.

13. The wireless communication system as claimed in claim 12, wherein the reflective faces are combined in a tapered shape that spreads towards the article on the transporting path.

14. A wireless communication method which performs communication between a wireless tag attached to an article transported on a transporting path and an antenna that irradiates an electromagnetic wave towards the transporting path, wherein:
the electromagnetic wave from the antenna is reflected by a reflective face of a reflection unit towards the wireless tag on the transporting path; and
the electromagnetic wave is reflected by the reflective face of the reflection unit at a position for improving an interference area that is generated due to interference between reflected waves.
